(19) Europäisches Patentamt
European Patent Office
Office européen des brevets

(11) Publication number: **0 199 271**
**A2**

(12) **EUROPEAN PATENT APPLICATION**

(21) Application number: 86105222.3

(22) Date of filing: 16.04.86

(51) Int. Cl.⁴: **G 11 B 5/84**
**G 11 B 5/858**

(30) Priority: 18.04.85 US 724401

(43) Date of publication of application:
29.10.86 Bulletin 86/44

(84) Designated Contracting States:
AT BE CH DE FR GB IT LI LU NL SE

(71) Applicant: ALUMINIUM COMPANY OF AMERICA
Alcoa Building
Pittsburgh Pennsylvania(US)

(72) Inventor: Kampert, William P.
112 Rogers Drive
Lower Burrell Pennsylvania(US)

(74) Representative: Baillie, Iain Cameron et al,
c/o Langner Parry Isartorplatz 5
D-8000 München 2(DE)

(54) Improved magnetic recording member.

(57) Disclosed is a method of making an improved magnetic recording member comprising the steps of providing an aluminium base alloy member, anodizing the member to provide thereon an oxide coating having pores therein, and treating the coating to enlarge the pore size, the treating being controlled to maintain the individuality of the pores. A magnetically receptive material is deposited in the enlarged pores to provide a magnetic recording member having an increased dipole signal.

```
┌─────────┐
│  CLEAN  │
└─────────┘
     │
┌──────────────────────┐
│ ANODIZE TO FORM OXIDE │
│ COATING ON ALUMINUM   │
└──────────────────────┘
     │
┌─────────────────────────────────┐
│    CONTROLLED DISSOLUTION        │
│ OF OXIDE COATING TO INCREASE     │
│    VOLUME OF PORES               │
└─────────────────────────────────┘
     │
┌──────────────────────┐
│  DEPOSIT MAGNETIC     │
│  RECEPTIVE MATERIAL   │
│    IN PORES           │
└──────────────────────┘
```

FIGURE I

EP 0 199 271 A2

## IMPROVED MAGNETIC RECORDING MEMBER

This invention relates to magnetic recording members
and more particularly, it includes a method of making an improved
magnetic recording member utilizing an anodized aluminum.

In the prior art, it is known that magnetic coatings
can be applied to substrates such as metal and plastic. Such
coatings may be applied by plating; or, such coatings may be
formulated by incorporating a powder, e.g. iron oxide, in a
binder and then applying the coating to a substrate. Another
method of forming a magnetically receptive coating is disclosed
in U.S. Patent 4,109,287 where it is noted that metals deposited
in the pores of an anodized coating have magnetic properties
suitable for recording material. However, it was also disclosed
that metals were normally deposited in the pores of the anodized
coating for purposes of obtaining different colors. Such
coloring processes are disclosed in U.S. Patent 3,798,137,
incorporated herein by reference.

In the iron oxide coating, the oxide consists of
needle-like particles approximately one micrometer in length and

U.S. 724,401

0.1 micrometer wide. Each needle has a dipole magnetic field and alignment of the needles are achieved during manufacture by subjecting an undried coating containing such needles to a magnetic field. The only change that can be achieved thereafter in the dipole magnetic field is a reversal of the north and south poles at the ends of the needle. When data is stored on a disk, the read/write head applies a magnetic field. When the field of the head is removed, a region of polarized material remains magnetized, and thus, storage of data occurs. The read/write head determines the storage of data by sensing the magnetic field applied during the writing cycle. Magnetic field strength is measured by a hysteresis loop which measures retentivity and coercivity. To ensure the permanency of the data stored, it is important that the magnetization remaining (retentivity) is large and that a moderately strong field (coercivity) is required to demagnetize the material. In other words, the hysteresis loop for the magnetic medium should be as large as possible and nearly square.

When iron oxide coatings are used, the magnetization or the magnetic poles are in the plane of the disk, and when the pores of anodized aluminum contain magnetic material, the resulting dipoles are oriented perpendicular to the plane of the disk, which permits greater storage per unit of area. However, one of the problems with the anodized aluminum approach heretofore is that the dipole or signal is moderately weak even if cobalt is deposited in the pores. Attempts to increase the signal have been to increase the thickness of the anodized coating. This increases the pore length and thereby increases the amount of cobalt deposited in the pore. However, this approach is greatly limited because of the constraints in forming thicker anodized coatings. It will be appreciated that there is a great need to have the dipole signal as large as possible so as to minimize the closeness of the read/write head to the disk surface. If the read/write head can be placed further away, this greatly minimizes disturbances such as head crashes encountered as a result of dust particles, for example, or other irregularities encountered on the disk surface as a result of manufacturing.

The present invention solves this problem and provides for a significantly increased dipole signal.

In accordance with the invention, there is provided a method for making an improved magnetic recording member. The method includes providing an anodized coating having pores therein on an aluminum base alloy member and providing controlled treatment of the anodized coating to enlarge the diameter or the cross-sectional area of the pores therein without destroying the individuality of the pores. In the method, a magnetically receptive material is deposited in the enlarged pores. In addition, the invention includes an improved mangetic recording member which can result from this method.

Figure 1 is a flow chart illustrating the method of the invention.

Figure 2 is a hysteresis curve of a conventionally anodized magnetic recording coating.

Figure 3 is a hysteresis curve of a magnetic recording material anodized and treated in accordance with the invention.

Figure 4 is a hysteresis curve of another magnetic recording material anodized and treated in accordance with the invention.

Figures 5a and 5b are schematic representations of the structure of an anodized coating on an aluminum substrate before and after treating in accordance with the present invention.

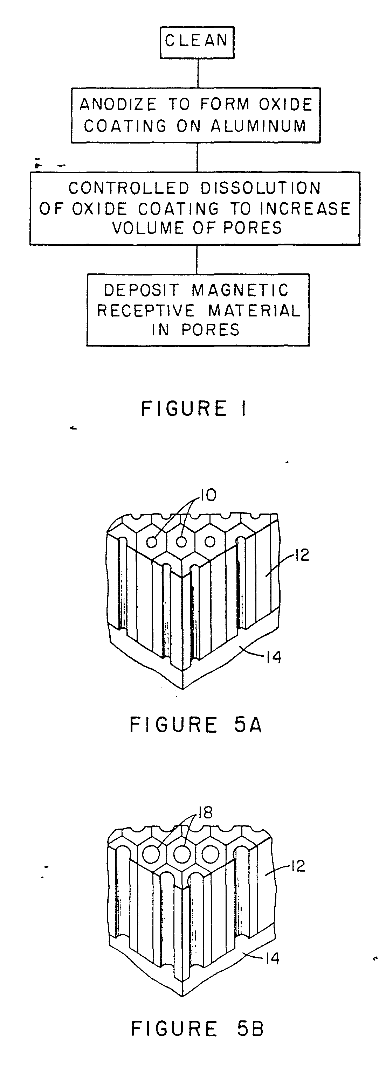

In Figure 1, there is provided a schematic for providing a magnetic recording member on aluminum having an improved dipole signal. In the first step, the aluminum material to be anodized is first subjected to a cleaning pretreatment which includes deoxidizing, caustic etching and desmutting. Thereafter, the aluminum member is subjected to an anodizing treatment. Anodization may be performed under direct current or alternating current or combinations of direct and alternating current conditions or plused direct current so long as an ordinary oxide coating is obtained having pores therein. Standard acid electrolytes may also be used. These include inorganic acids such as sulfuric, chromic, phosphoric, and organic acids such as sulfothalic, sulfosalicylic, maleic, oxalic and sulfamic. To the standard electrolytes, such as sulfuric acid, may be added organic acids, for example, and the combinations may be used in providing the anodized coating. Conventional anodizing treatments which may be used include DC voltage and a sulfuric acid electrolyte as taught by Gower U.S. Patent 1,869,058. The anodic coating thickness on the anodized aluminum may range from 0.05 to 5 mils, the thickness being controlled by varying anodizing time, temperature and current.

Typical pore diameter for conventional anodizing can range from about 80 to 500 angstroms with a typical pore diameter being 120 to 350 angstroms for sulfuric, chromic or phosphoric acids.

When a typical anodized coating, e.g. formed in sulfuric acid electrolyte, is treated in accordance with the present invention, the pore diameter can be increased remarkably with little or no significant effect on the thickness of the coating. That is, when the coating is treated in accordance with the invention, the thickness of the coating is not significantly diminished. This increase in pore diameter can be obtained without destroying the individuality of the pores. However, the treatment must be carried out with carefully controlled times and temperatures, as explained herein. Accordingly, it has been found that if the anodized surface is treated in an acid solution, controlled dissolution of the oxide surrounding the pores can be obtained. Inorganic acids such as sulfuric, phosphoric and chromic can be used. However, a combination of phosphoric and chromic acids are preferred since the combination operates to enlarge the pores without attacking the aluminum substrate. When the combination of phosphoric and chromic acids are used, phosphoric can range from 0.5 to 15 wt.%, and chromic can range from 0.5 to 10 wt.%, with the remainder water. Preferably, phosphoric acid is in the range of 3 to 7 wt.% and chromic acid is in the range of 1 to 3 wt.%, the remainder water. A typical solution contains 5 wt.% phosphoric acid and 2 wt.% chromic acid, the remainder water. Normally, the time for which the anodized coating is treated is that sufficient to remove oxide to the extent desired without destroying the individuality of the pores. This time can range from a very short period to several minutes or more depending to a certain extent on the temperature of the solution and the thickness of the coating. For a phosphoric-chromic acid solution at room temperature, the time for dissolution would typically not exceed 2 hours at a temperature in the range of 80 to 100°F and a time of 15 to 90 seconds has been found to be satisfactory at 90°F although temperatures as high as 120°F or more may be used provided the time and concentration of the acid is controlled.

As noted earlier, the dissolution must be carefully controlled. If the dissolution is not controlled, the coating can be removed.

Accordingly, when the anodic coating is treated in accordance with the invention it has been found that the pore diameter can be increased rather dramatically without any adverse effects. Depending, of course, on the anodizing conditions, the pore diameter can be increased a number of times and this results in a significant increase in the dipole moment without any adverse effects. In a typical anodic coating resulting from a sulfuric acid electrolyte, the pore diameter can be increased from 120 to 330 angstroms. Thus, the increase in the pore diameter can be more than 50% and typically over 100%, depending on the anodizing conditions, e.g., electrolyte, temperature, time, etc., and the size of pore which is initially present in the anodic coating. The center-to-center distance of adjacent pores can vary but usually is on the order of about 300 to 1400 angstroms. It will be understood that as the diameter is increased, the volume goes up by the square of the radius.

Figures 5a and 5b schematically show the anodized coating before and after treatment in accordance with the present invention. Figures 5a and 5b show anodic coating 12 on an aluminum substrate 14. In Figure 5a, pores 10 are represented conventionally. In Figure 5b, pores 18 are shown as modified. That is, the diameter of the pores is increased significantly while maintaining the individual pores. Further, the cross-sectional area of the pore can be increased significantly without adversely diminishing the thickness of the oxide coating.

In the present invention, it will be appreciated that the pore volume of the anodized coating can be increased rather dramatically which, of course, translates to a significant increase in the dipole moment. Accordingly, the ratio of the pore volume of the improved anodic coating of the present invention to the pore volume of the conventional anodic coating can range from 1.2 to 10.6 and preferably in the range of 1.8 to 7.3.

After the anodized coatings have been treated in accordance with the invention to increase the pore volume, a magnetic receptive material is then deposited in the pores. The magnetic receptive material may be deposited with the aid of electricity (electrodeposition) or without electricity (electro-lessdeposition). In using electrodeposition, the member having a coating in accordance with the invention is immersed or subjected to an electrolyte solution containing one or more metal salts, such as cobalt, nickel, chromium and the like. The concentration of these salts can range from 10 to 150 g/l or higher in an aqueous solution when two or more salts are used. The electrodeposition may be effected by DC or AC or combinations of these with AC being presently preferred, and the pores are filled from bottom to top. The pH of the aqueous solution may be adjusted and other additives may be used which aid deposition. Preferred conditions for deposition of these metals in the pores include a temperature of 5 to 90°C, a current density of from about 1 to 40 asf and a time from about 1 to 20 minutes.

## Example 1

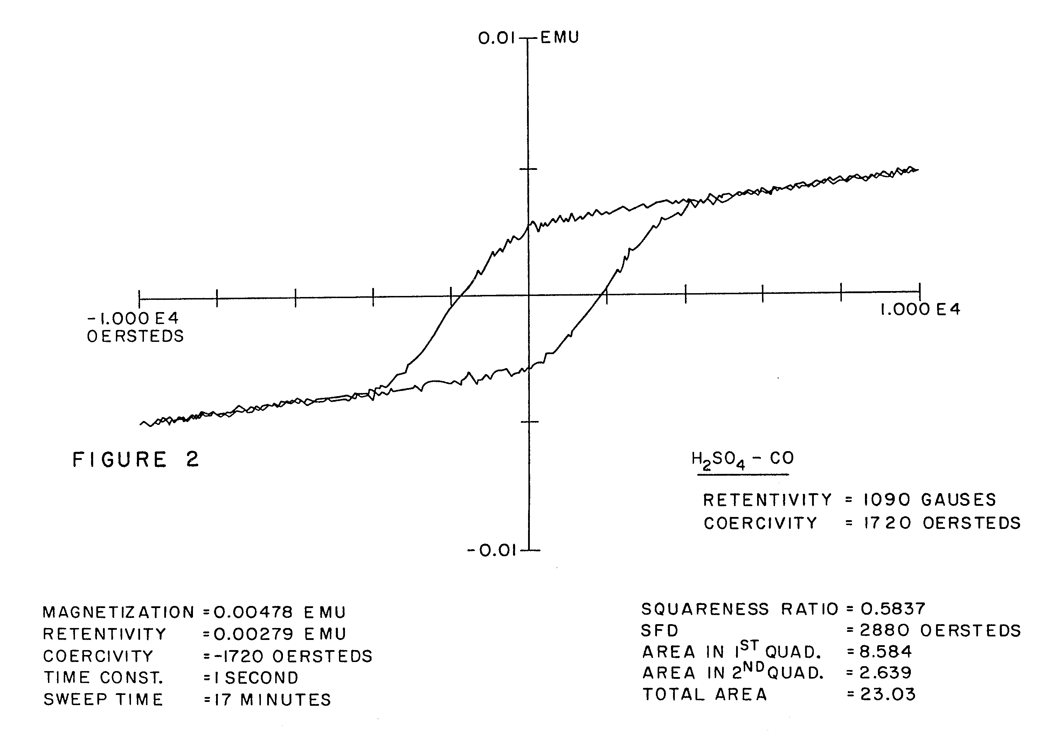

From Figure 2, it will be noted that the dipole moment resulting from a conventional anodic coating having cobalt deposited therein measured just slightly over 0.003 EMU. The anodic coating on an aluminum substrate (AA5083) was obtained under the following conditions: 15 wt.% $H_2SO_4$, 22°C, 12 asf, for 2 to 5 minutes. The cobalt was deposited by immersing the anodized material in an aqueous electrolyte containing 100 g/l cobalt sulfate, 40 g/l $H_3BO_4$, 175 g/l/ $Mg_2SO_4$, 10 g/l $C_4H_6O_6$ acid subjecting it to electrodeposition. Electrodeposition was carried out at 6 asf (A.C.) for 5 minutes.

## Example 2

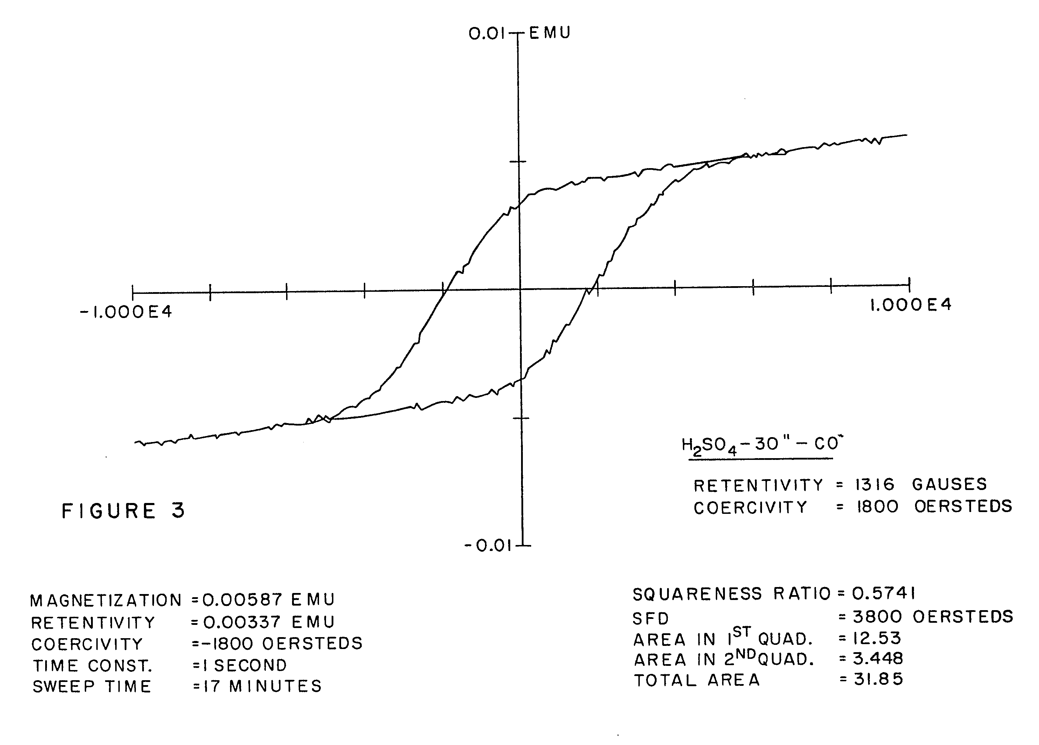

Figure 3 shows the dipole moment of an aluminum member (AA5083) treated as in Example 1 except that after anodization and prior to deposition, the coating was subjected for 30 seconds in a 32°C solution containing 2 wt.% chromic acid and 5 wt.% phosphoric acid, the remainder water. It will be noted that the magnetic moment has increased substantially to about 0.005 EMU.

## Example 3

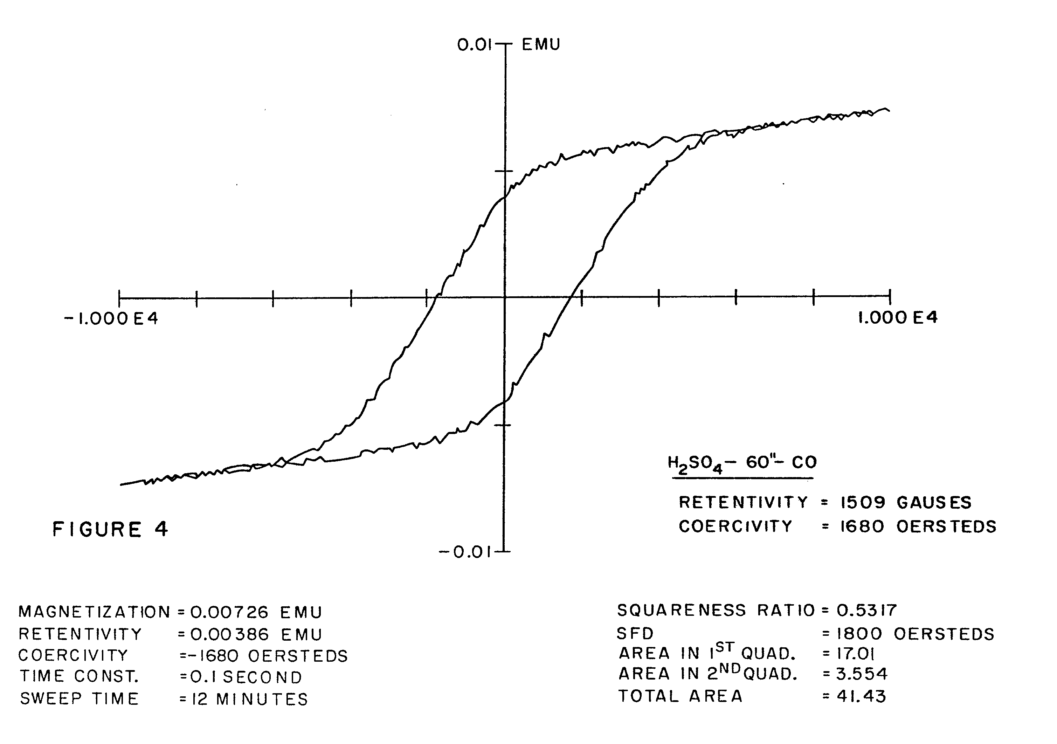

Figure 4 shows the dipole moment of an aluminum member treated as in Example 2 except the anodic coating was treated for a period of 60 seconds prior to being subject to the deposition step. It will be observed that the dipole has been almost doubled.

Table I provides further magnetic characterization of several samples of anodized coatings 1 $\mu$m thick treated as in Examples 1-3, including information obtained from hysteresis loops.

## Table I

| Specimen Number | Anodizing Electrolyte | Dissolution Time (secs.) | Plated Metal | Metal Conc. (wt.%) |
|---|---|---|---|---|
| 533736 | $H_3PO_4$ | 0 | Co | 20 |
| 533724 | $H_2SO_4$ | 0 | Co | 14 |
| 533717 | " | 0 | Ni | 2.4 |
| 533731 | $H_3PO_4$ | 30 | Co | 21 |
| 533732 | $H_3PO_4$ | 60 | Co | 19 |
| 533725 | $H_2SO_4$ | 30 | Co | 19 |
| 533726 | " | 60 | Co | 25 |
| 533719 | " | 60 | Ni | 11 |

## Table I (cont'd.)

| Specimen Number | Parallel Mode Coercivity (Oersteds) | Retentivity (gauses) | Perpendicular Coercivity (Oersteds) | Retentivity (gauses) | Squareness |
|---|---|---|---|---|---|
| 533736 | 440 | 354 | 600 | 254 | .11 |
| 533724 | 600 | 234 | 1720 | 1090 | .58 |
| 533717 | 680 | 8 | 200 | 101 | .14 |
| 533731 | 520 | 570 | 600 | 376 | .13 |
| 533732 | 440 | 477 | 520 | 177 | .07 |
| 533725 | 600 | 327 | 1800 | 1316 | .57 |
| 533726 | 660 | 512 | 1680 | 1509 | .53 |
| 533719 | 120 | 81 | 1000 | 210 | .23 |

From Table I, it will be seen that for sulfuric acid anodized material, the amount of metal deposited increased with chromic/phosphoric treatment time indicating that the pore volume was increased. Further, the retentivity, the retained magnetic flux density or memory, in the perpendicular mode of the sulfuric acid anodized specimen was increased significantly when the specimens were treated in accordance with the invention.

The low squareness value resulting from the perpendicular

-11-

dipole for the phosphoric acid coating treated in accordance with this invention indicates that a significant horizontal dipole can be obtained. Therefore, a phosphoric acid coating treated in accordance with this invention can be polarized in the horizontal direction.

While the invention has been described in terms of preferred embodiments, the claims appended hereto are intended to encompass other embodiments which fall within the spirit of the invention.

# C L A I M S

1.      A method for making an improved magnetic recording member, comprising the steps of:

    (a)  providing an aluminum base alloy member;

    (b)  anodizing said member to provide thereon an anodized coating having pores therein defined by said coating, the coating comprised of aluminum oxide;
characterized by

    (c)  treating said anodized coating to enlarge the cross-sectional area of the pores therein by removing coating defining said pores, said treatment controlled so as to maintain the individuality of said pores; and

    (d)  depositing in said pores a magnetically receptive material which when magnetized has an increased dipole moment.

2.      A method in accordance with claim 1, characterized in that the ratio of the pore volume of a treated coating to pore volume of a conventional coating is in the range of 1.2 to 10.6.

3.      A method in accordance with claim 1 or 2, characterized in that said treating is performed in an acid solution.

4.      A method in accordance with claim 3, characterized in that the acid is at least one of the group of sulfuric, phosphoric and chromic acids.

5.      A method in accordance with claim 3 or 4, characterized in that the acid is a combination of phosphoric and chromic acid.

6.      A method in accordance with claim 5, characterized in that the treating solution is aqueous and the content of each acid is one of the following:

    (a)  phosphoric acid is in the range of .5 to 15 wt.%;

    (b)  chromic acid is in the range of .5 to 10 wt.%;

    (c)  phosphoric acid is in the range of 3 to 7 wt.%;

U.S. 724,401

(d)    chromic acid is in the range of 1 to 3 wt.%;

(e)    the amount of phosphoric acid is about 5 wt.% and the amount of chromic acid is about 2 wt.%.

7.    A method in accordance with any one of the preceding claims, characterized in that the time and temperature of the treating step are one of the following:

(a)    the treating step does not exceed 120 minutes;

(b)    the temperature does not exceed 49°C. (120°F.);

(c)    the temperature for treating is in the range of 26 to 38°C. (80 to 100°F.);

(d)    the treatment is in the range of 15 to 90 seconds.

8.    A method in accordance with any one of the preceding claims, characterized in that the magnetically receptive material is cobalt or nickel.

9.    An improved magnetic recording member comprised of:

(a)    an aluminum base alloy member; characterized by

(b)    an anodic oxide coating on the surface of said member having pores therein having the cross-sectional area thereof enlarged, the enlargement of the pores resulting from an acid treatment which is controlled so as to maintain the individuality of the pores, the enlarged pores substantially filled with a magnetically receptive material capable of being magnetized to provide an increased dipole signal.

10.    A recording member according to claim 9, characterized in that the ratio of the pore volume of the enlarged pores to pore volume of a conventional coating is in the range of 1.2 to 10.6.

```
        ┌─────────┐
        │  CLEAN  │
        └─────────┘
             │
┌───────────────────────────┐
│  ANODIZE TO FORM OXIDE     │
│  COATING ON ALUMINUM       │
└───────────────────────────┘
             │
┌───────────────────────────┐
│  CONTROLLED DISSOLUTION    │
│  OF OXIDE COATING TO INCREASE │
│     VOLUME OF PORES        │
└───────────────────────────┘
             │
┌───────────────────────────┐
│   DEPOSIT MAGNETIC         │
│  RECEPTIVE MATERIAL        │
│      IN PORES              │
└───────────────────────────┘
```

FIGURE I

FIGURE 5A

FIGURE 5B

0.01 — EMU

−1.000 E4
OERSTEDS

1.000 E4

FIGURE 2

$H_2SO_4$ − CO

RETENTIVITY = 1090 GAUSES
COERCIVITY = 1720 OERSTEDS

−0.01

MAGNETIZATION = 0.00478 EMU
RETENTIVITY = 0.00279 EMU
COERCIVITY = −1720 OERSTEDS
TIME CONST. = 1 SECOND
SWEEP TIME = 17 MINUTES

SQUARENESS RATIO = 0.5837
SFD = 2880 OERSTEDS
AREA IN $1^{ST}$ QUAD. = 8.584
AREA IN $2^{ND}$ QUAD. = 2.639
TOTAL AREA = 23.03

0.01 ⊤ EMU

−1.000 E4                1.000 E4

$H_2SO_4 - 30'' - CO^-$

RETENTIVITY = 1316 GAUSES
COERCIVITY  = 1800 OERSTEDS

FIGURE 3

−0.01 ⊥

MAGNETIZATION = 0.00587 EMU
RETENTIVITY   = 0.00337 EMU
COERCIVITY    = −1800 OERSTEDS
TIME CONST.   = 1 SECOND
SWEEP TIME    = 17 MINUTES

SQUARENESS RATIO = 0.5741
SFD             = 3800 OERSTEDS
AREA IN $1^{ST}$ QUAD. = 12.53
AREA IN $2^{ND}$ QUAD. = 3.448
TOTAL AREA      = 31.85

FIGURE 4

0.01 ⊤ EMU

−1.000 E4

1.000 E4

−0.01 ⊥

$H_2SO_4 - 60" - CO$

RETENTIVITY = 1509 GAUSES
COERCIVITY  = 1680 OERSTEDS

MAGNETIZATION = 0.00726 EMU
RETENTIVITY   = 0.00386 EMU
COERCIVITY    = −1680 OERSTEDS
TIME CONST.   = 0.1 SECOND
SWEEP TIME    = 12 MINUTES

SQUARENESS RATIO = 0.5317
SFD              = 1800 OERSTEDS
AREA IN $1^{ST}$ QUAD.  = 17.01
AREA IN $2^{ND}$ QUAD.  = 3.554
TOTAL AREA       = 41.43